(19) Europäisches Patentamt
European Patent Office
Office européen des brevets

(11) **EP 3 570 074 A1**

(12) **DEMANDE DE BREVET EUROPEEN**

(43) Date de publication:
**20.11.2019 Bulletin 2019/47**

(51) Int Cl.:
***G01V 1/30*** *(2006.01)*   ***G01V 99/00*** *(2009.01)*

(21) Numéro de dépôt: **19173720.4**

(22) Date de dépôt: **10.05.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.05.2018 FR 1854190**

(71) Demandeurs:
• **IFP Energies nouvelles**
  **92852 Rueil-Malmaison Cedex (FR)**

• **SORBONNE UNIVERSITE**
  **75006 Paris (FR)**
• **CENTRE NATIONAL DE LA RECHERCHE SCIENTIFIQUE**
  **75794 Paris Cedex 16 (FR)**

(72) Inventeurs:
• **LE BOUTEILLER, Pauline**
  **92852 RUEIL-MALMAISON CEDEX (FR)**
• **CHARLETY, Jean**
  **92852 RUEIL MALMAISON CEDEX (FR)**

(54) **PROCÉDÉ POUR LA DÉTECTION D'OBJETS GÉOLOGIQUES DANS UNE IMAGE**

(57) - L'invention concerne un procédé pour la détection automatique d'objets géologiques appartenant à un type donné d'objet géologique dans une image sismique, à partir de probabilités a priori d'appartenance au type d'objet géologique attribuées à chacun des échantillons de l'image à interpréter. Selon l'invention, on applique préalablement une transformation de l'image en une pluralité d'attributs sismiques, puis une méthode de classification. Puis, pour chacune des classes ainsi déterminées, on détermine une probabilité a posteriori d'appartenance pour chacun des échantillons de cette classe au type d'objet géologique en fonction des probabilités a priori d'appartenance, de la classe, et d'un paramètre $\alpha$ décrivant une confiance sur les probabilités a priori d'appartenance. Puis, à chaque échantillon de l'image, à partir de la classe de cet échantillon, on attribue la probabilité a posteriori d'appartenance au type d'objet géologique déterminée pour les échantillons de cette classe. Puis, on détecte les objets géologiques appartenant au type d'objet géologique à partir des probabilités a posteriori d'appartenance au type d'objet géologique ainsi déterminées pour chacun des échantillons de l'image à interpréter.

- Application notamment à l'exploration et à l'exploitation pétrolière.

Figure 1

C6
C5
C4
C3
C2
C1

EP 3 570 074 A1

**Description**

La présente invention concerne le domaine de l'exploration et de l'exploitation d'un fluide contenu dans une formation souterraine.

En particulier, la présente invention concerne le domaine de l'exploration et l'exploitation d'hydrocarbures présents dans une formation souterraine, ou encore le domaine de l'exploration d'une formation souterraine en vue d'un stockage géologique d'un fluide tel que du $CO_2$, ou encore le domaine de la surveillance d'un site de stockage géologique d'un fluide.

L'exploration pétrolière consiste à rechercher des gisements d'hydrocarbures au sein d'un bassin sédimentaire. La compréhension des principes de la genèse des hydrocarbures et leurs liens avec l'histoire géologique du sous-sol, a permis la mise au point de méthodes d'évaluation du potentiel pétrolier d'un bassin sédimentaire. La démarche générale de l'évaluation du potentiel pétrolier d'un bassin sédimentaire comporte des allers-retours entre une prédiction du potentiel pétrolier du bassin sédimentaire, réalisée à partir d'informations mesurées relatives au bassin étudié (analyse d'affleurements, campagnes sismiques, forages par exemple), et des forages d'exploration dans les différentes zones présentant le meilleur potentiel, afin de confirmer ou infirmer le potentiel prédit préalablement, et d'acquérir de nouvelles informations permettant de préciser les prédictions de potentiel pétrolier du bassin étudié.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation pour ces zones (par exemple à l'aide d'une simulation de réservoir, afin de définir les nombre et positions des puits d'exploitation permettant une récupération d'hydrocarbures optimale), à forer des puits d'exploitation et, de façon générale, à mettre en place les infrastructures de production nécessaires au développement du gisement.

Une technique largement utilisée dans le domaine de l'exploration et de l'exploitation pétrolière est la prospection sismique. La prospection sismique consiste en général en trois étapes : l'acquisition de données sismiques, le traitement de ces données sismiques, et enfin l'interprétation des données sismiques traitées, alors appelées image sismique.

L'interprétation d'une image sismique consiste à retrouver des objets géologiques (connus aussi sous le terme « geobodies ») d'intérêt au sein de l'image sismique. De manière générale, on peut distinguer au sein d'une image sismique :

- des objets géologiques à grande échelle, tels que les toits et bases des couches géologiques, les surfaces d'érosion, les failles etc. Ce type d'objet est classiquement interprété par un géologue structuraliste ou un géophysicien.
- des objets géologiques à plus petite échelle, tels que des chenaux fluviatiles, des dunes, des dépôts de turbidites, des dépôts de transport de masse, couramment appelés MTD (« mass-transport deposits » en anglais). Typiquement, les objets géologiques à petite échelle sont interprétés par un géologue sédimentologiste. Ces objets sont caractérisés par des motifs particuliers, formés par leurs réflecteurs internes.

Par ailleurs, il est à noter qu'une image sismique peut aussi comprendre des artéfacts sismiques, ne correspondant à aucun objet géologique concret. Ces artéfacts peuvent provenir du traitement sismique qui a conduit à l'image sismique. Le géophysicien est particulièrement à même de reconnaître de tels artéfacts sismiques.

Ainsi, à partir de l'interprétation d'une image sismique, on peut déduire des informations sur la formation souterraine étudiée, et notamment la présence, la forme et le type d'objets géologiques présents dans la formation. Les amplitudes sismiques associées à ces objets informent aussi sur les propriétés pétro-physiques de la formation. La qualité des informations issues de l'interprétation d'une image sismique est donc essentielle. En effet, de ces informations sont construites des représentations de la formation étudiée, appelées modèles géologiques, qui permettent de déterminer de nombreux paramètres techniques relatifs à la recherche, l'étude ou l'exploitation d'un réservoir, d'hydrocarbures par exemple.

Toutefois, bien souvent, l'interprétation des objets géologiques dans une image sismique repose sur l'expérience d'un interprétateur, qui sait, par expérience, que l'objet en question a telle ou telle organisation des réflecteurs caractéristiques ou autrement dit tel « faciès sismique » particulier.

Des méthodes existent pour aller vers une automatisation du repérage de certains types d'objets géologiques dans une image sismique. Ces méthodes permettent d'accélérer considérablement l'interprétation des images sismiques (ce qui est avantageux dans le cas de gros volumes de données sismiques à interpréter), et permettent aussi rendre de cette interprétation moins dépendante de l'expérience de l'interprétateur. Ces méthodes sont à ce jour relativement performantes en ce qui concerne les objets géologiques à grande échelle tels que définis ci-dessus, mais leurs performances sont plus limitées dans le cas d'objets géologiques à plus petite échelle.

En particulier, certains types d'objets géologiques apparaissent dans l'image sismique comme des régions qui combinent plusieurs aspects différents, ou autrement dit plusieurs faciès sismiques. Pour ce type d'objets, la détection visuelle est, dans certain cas, possible pour un interprétateur expérimenté, mais plus difficile à mettre en oeuvre de manière automatique, ce qui est dommageable pour l'interprétation de grands volumes de données sismiques.

**Etat de la technique**

Les documents suivants seront cités dans la suite de la description :

Adams, R. et Bishof, L. (1994). Seeded region growing. IEEE Trans on Pattern Analysis and Machine Intelligence, vol. 16, pp. 641-647.

Bishop, C. M., Svensén, M. and Williams, C.K.I. [1998] GTM: The Generative Topographic Mapping. Neural computation, 10(1), 215-234.

Carrillat, A., Randen, T., Sonneland, L. and Elvebakk, G. [2002] Seismic stratigraphic mapping of carbonate mounds using 3D texture attributes. 64th EAGE Conférence & Exhibition, Extended Abstracts, G-41.

Haralick, Robert M., Shanmugam, K. and Dinstein, I. « Textural Features for Image Classification ». IEEE Transactions on Systems, Man, and Cybernetics. Vol. SMC-3 (6), 1973, pp. 610-621.

Hashemi, H., De Beukelaar, P., Beiranvand, B. and Seiedali, M. [2017] Clustering seismic datasets for optimized faciès analysis using a SSCSOM technique. 79th EAGE Conférence & Exhibition, Extended Abstracts, Tu B4 10.

Kohonen, T. [1986] Learning vector quantization for pattern récognition. Technical report TKK-F-1601, Helsinki University of Technology.

Lloyd, Stuart P. "Least Squares Quantization in PCM." IEEE Transactions on Information Theory. Vol. 28, 1982, pp. 129-137.

Matos, M. C., Malleswar (Moe) Y., Sipuikinene M. A. and Marfurt K. J. [2011] Integrated seismic texture segmentation and cluster analysis applied to channel delineation and chert reservoir characterization. Geophysics, 76(5), P11-P21.

Mumford, D. and Shah, J. (1989). Optimal approximation by piecewise smooth functions and associated variational problems. Communications on Pure Applied Mathematics, vol. 42, pp. 577-685.

Zhao, T., Zhang, J., Li, F. and Marfurt, K. J. [2016] Characterizing a turbidite system in Canterbury Basin, New Zealand, using seismic attributes and distance-preserving self-organizing maps. Interpretation, 4(1), SB79-SB89.

Zhao, T., Li, F. and Marfurt, K. [2016b] Advanced self-organizing map faciès analysis with stratigraphic constraint. SEG Technical Program Expanded Abstracts, 1666-1670.

Wang, Z., Hegazy, T., Long, Z. and AIRegib, G. [2015] Noise-robust détection and tracking of salt domes in postmigrated volumes using texture, tensors, and subspace learning. Geophysics, 80(6), WD101-WD116.

West, B.P. and May, S.R., inventors; Exxonmobil Upstream Research Company [2002] Method for seismic faciès interprétation using textural analysis and neural networks. U.S. Patent 6,438,493, issued August 20, 2002.

De manière classique, on peut distinguer des méthodes visant à détecter des objets géologiques ayant des propriétés sismiques homogènes (cf. section 1 ci-dessous) et des méthodes visant à détecter des objets géologiques ayant des propriétés sismiques hétérogènes (cf. section 2 ci-dessous).

## 1. Objets ayant des propriétés sismiques homogènes

Parmi les méthodes existantes visant à détecter des objets ayant des propriétés sismiques internes homogènes, on connaît les approches dites « supervisées » de traitement de l'image sismique. Pour ce type de méthode, une représentation de l'image est en général utilisée à la place de l'image originale en amplitude. On peut par exemple représenter l'image par des filtrages de l'image (avec différents filtres), ou des calculs de statistiques en chaque échantillon de l'image avec un voisinage prédéfini (statistiques d'ordre 1, 2 ou plus). Pour l'interprétation de données de sismique réflexion, on appelle « attribut » une grandeur que l'on peut calculer sur l'image sismique, qui a elle-même une valeur par échantillon de l'image. Un attribut, ou une combinaison d'attributs (pouvant se ramener au calcul en plusieurs étapes d'un seul attribut final), est choisi pour sa représentativité du faciès sismique de l'objet recherché. Cet attribut doit être suffisamment discriminant pour le faciès en question, i.e. il doit prendre des valeurs très différentes dans les régions comportant le faciès en question par rapport aux autres régions de l'image sismique.

Puis, par exemple par un seuillage sur les valeurs de cet attribut, on détermine une image binaire dans laquelle les régions correspondant au faciès d'intérêt sont mises en évidence par rapport aux autres. On peut aussi utiliser un ou des post-traitements plus élaborés qu'un simple seuillage pour la détection des régions d'intérêt. On connaît notamment les algorithmes de croissance de régions, qui permettent, à partir d'au moins un point source dans l'objet recherché, d'étendre de plus en plus, au voisinage de ce point source, la région considérée comme « l'objet », jusqu'à ce qu'un critère d'arrêt prédéfini, portant sur le contour obtenu ou sur les valeurs prises par les attributs à l'intérieur de ce contour, soit atteint.

On connaît par exemple le document (Wang et al., 2015) qui met en oeuvre une méthode pour la détection d'un corps salin dans une image sismique, les corps salins ayant de manière connue des propriétés sismiques homogènes. Ce document décrit notamment l'utilisation d'un attribut textural de type « Gradient de texture » qui caractérise en chaque pixel de l'image sismique la variation de la texture au voisinage de ce pixel. Puis, un algorithme de croissance de régions à partir d'un point source placé dans l'objet visé (le corps salin) est utilisé. Ainsi, la détection repose sur des propriétés initialement fixées, grâce au caractère homogène du corps salin (tant physiquement que dans son imagerie sismique).

On connaît également le brevet EP2659291 B1, qui décrit une méthode permettant de prendre en compte plusieurs attributs non pas en les combinant en un autre, mais en appliquant un post-traitement par algorithme de détection de contour (et non de croissance de région) pour chaque image d'attribut séparément. La détection de contour permet d'introduire des contraintes a priori sur la topologie des objets à détecter, car ceux-ci sont alors représentés par leurs contours (et ce sont ces contours qui subissent des modifications au cours de l'application de la méthode). Les contraintes introduites dans la détection de contours permettent d'obtenir des objets topologiquement pertinents malgré le bruit ou la représentation incomplète de l'objet dans la donnée brute. Le processus est mené soit séquentiellement (en calculant le contour d'abord uniquement pour une image d'attribut, puis pour une autre, etc.), soit simultanément (en calculant le contour en incluant des contraintes multiples venant des différentes images d'attributs). Ainsi, malgré l'introduction de contraintes a priori sur les topologies des objets, et malgré l'utilisation de plusieurs attributs différents, les objets doivent avoir les mêmes gammes de valeurs d'attributs, i.e. être homogènes.

Ainsi, de manière générale, ces approches sont caractérisées par la présence d'une étape « manuelle » (par opposition à « automatique ») de choix de faciès de référence caractérisant l'objet à détecter. Pour souligner, ou utiliser, la ressemblance entre le faciès d'une région de la donnée et cet aspect de référence, ces méthodes passent par des attributs. Des gammes de valeurs typiques de ces attributs sont choisies pour définir l'aspect de référence. Quel que soit le post-traitement (croissance de région ou détection et application de contrainte sur des contours), un seuillage sur les attributs est donc utilisé pour distinguer les régions correspondant à des objets candidats (ensuite raffinés par le post-traitement). Cette approche est intéressante car elle est basée objet (par exemple pour détecter des corps salins). Mais elle n'est pas adaptée à des objets ou régions caractérisés par des propriétés sismiques hétérogènes.

## 2. Objets ayant des propriétés sismiques hétérogènes

Dans le but de distinguer des objets aux propriétés sismiques hétérogènes, il est nécessaire d'utiliser une approche permettant de faire ressortir les différences entre régions de l'image sismique de manière non binaire. On distingue les approches supervisées et non supervisées.

## 2.1. Approches supervisées

Afin de représenter la variabilité de faciès présente dans un jeu de données sismiques, on peut envisager de classifier tous les échantillons de l'image sismique. Les approches supervisées réalisant cette classification sont typiquement basées sur une sélection de plusieurs faciès de référence, censée représenter les faciès typiques que l'on trouve dans le jeu de données. Cette sélection est faite grâce à une étude manuelle sur la donnée sismique.

Dans le document (Carrillat et al., 2002), l'utilisateur choisit des attributs sismiques qu'il juge cohérents pour discriminer les différents faciès du jeu de données. L'utilisateur choisit ensuite des seuils (plusieurs seuils sur un ou plusieurs attributs), ce qui permet alors de classifier chaque pixel de la donnée selon les classes prédéfinies, en calculant les attributs choisis.

On connaît également le brevet EP 1334379 A1 (US 6438493 B1) qui décrit une méthode selon laquelle l'utilisateur choisit des zones de l'image sismique à interpréter qu'il considère comme des références pour différents faciès ; il choisit aussi des attributs sismiques qu'il juge pertinents. Un réseau de neurones avec rétro-propagation va ensuite apprendre (dans une phase d'entraînement) les seuillages à appliquer sur chaque attribut pour permettre de classifier l'ensemble de l'information selon les faciès de référence choisis initialement.

Toutefois, la sélection de faciès de référence par l'utilisateur présente deux inconvénients majeurs :

- Elle limite l'expression de la variabilité contenue dans l'image sismique. En effet, le jeu des faciès de référence choisi par l'utilisateur peut ne pas couvrir totalement la variété des faciès présents dans l'image sismique. Cela peut mener à des cas où des régions de l'image sismique sont affectées, lors de la classification, à un faciès A, par défaut seulement, alors qu'en réalité leur propre aspect est bien différent du faciès A même visuellement.

- Le jeu de faciès de référence défini par l'utilisateur peut donner une représentation de cette variabilité qui est déséquilibrée. En effet, parmi ces faciès de référence, certains faciès (A et B par exemple) peuvent être plus similaires entre eux que d'autres (A et C par exemple). Cela provoque un biais dans les probabilités qu'une région soit classée dans un faciès en particulier, en sortie de la classification. Par exemple, si l'utilisateur a défini beaucoup de classes (c'est-à-dire beaucoup de faciès de référence) pour des faciès qui sont en fait relativement similaires (ex : faciès A, B1, B2, B3, B4, B5), et seulement une classe pour les faciès restants (ex : faciès C), le jeu de référence représente mal la variabilité de la donnée. Pour une région R, on pourra avoir par exemple des probabilités d'appartenance à chaque faciès de référence réparties de cette manière : A (10%), B1 (10%), B2 (10%), B3 (10%), B4 (10%), B5 (10%), C (40%). Par conséquent, la région R sera affectée au faciès C, alors que sa probabilité d'appartenance à l'un des aspects A, B1, B2, B3, B4 ou B5, est de 60%.

Ainsi, la variabilité des faciès présents dans une image sismique risque donc d'être mal représentée du fait du choix manuel des faciès de référence.

2.2. **Approches non supervisées**

Les méthodes non-supervisées ont quant à elles l'avantage de s'affranchir de ce potentiel biais introduit par l'utilisateur. En effet, pour ce type d'approche, la définition des aspects de référence s'effectue automatiquement, à partir des informations contenues dans la donnée.

Dans le domaine de l'interprétation sismique, les classifications en faciès sismiques reposant sur des algorithmes de classification non supervisée sont souvent basées sur des cartes auto-organisatrices (« Self-Organizing Map » en anglais, connues aussi sous l'acronyme « SOM » ; cf. par exemple (Kohonen 1986)) qui reposent sur un réseau de neurones, ou encore un algorithme alternatif aux méthodes SOM, basé sur une approche probabiliste telle que décrite dans le document (Bishop et al. 1998), et connu sous le nom de cartes topographiques génératrices (« Generative Topographic Mapping », et notée « GTM »).

Pour ces deux algorithmes, les clusters qui sont produits sont organisés spécifiquement ('rangés'), et continus dans leurs caractéristiques le long de ce 'rangement'. En particulier, (1) cela rend les visualisations de la classification plus utiles pour l'interprétation, puisque les couleurs proches correspondent à des clusters proches et donc similaires ; et (2) augmenter le nombre de clusters recherché ne change pas l'aspect global d'une visualisation avec une bonne échelle de couleur, puisque seulement plus de classes sont alors ajoutées à l'intérieur de la même échelle de couleur.

Ces avantages font que les interprétations de faciès sont facilitées pour l'utilisateur qui post-traite alors manuellement la donnée avec sa classification. Des exemples sont fournis dans le document (Matos et al., 2011) qui, après une utilisation de méthode de type SOM, interprète la classification pour déterminer les « délinéations » de chenaux et de réservoirs. On connaît également le document (Zhao et al., 2016), qui utilise une méthode appelée « Distance-Preserving SOM » ou DPSOM, qui est un perfectionnement de l'approche SOM. Le DPSOM est une amélioration dans le calcul du SOM : le calcul de la position des noeuds dans l'espace latent est ajusté pour que les distances dans l'espace des données soient préservées. Cela mène à une représentation (dans l'espace latent) plus discriminante entre les différents types de faciès (plus représentative des écarts entre les valeurs d'attributs de l'espace des données). Toutefois, de manière générale, ces algorithmes de classification non supervisés nécessitent une étape manuelle, par un interprétateur, d'interprétation des classes. En effet, les méthodes de classification non supervisées attribuent des labels à tous les échantillons d'une image sismique, mais n'indiquent pas quels labels sont pertinents par rapport à l'objet géologique recherché. De plus, ce type de méthode n'indique pas non plus si des groupements de labels (de classes) se retrouvent souvent dans l'image sismique. Cette étude reste à la charge d'un interprétateur, qui doit être notamment formé pour comprendre les résultats d'une classification non supervisée. De plus, ce type d'approche ne permet pas d'intégrer une information a priori.

On connaît également des méthodes dites semi-supervisées, qui améliorent les algorithmes non supervisés en introduisant des contraintes basées sur des informations d'un type autre que le type sismique.

Une telle approche est notamment décrite dans le document (Zhao et al., 2016b), qui enseigne un algorithme SOM contraint par une décomposition VMD (« Variational Model Décomposition »), qui est une décomposition du signal sismique en plusieurs composantes et qui informe sur des cycles stratigraphiques possibles en une trace sismique donnée. Cette information VMD correspond à l'information a priori dans cette approche semi-supervisée. Elle contraint la méthode SOM à classifier dans des classes proches (similaires) les régions d'une même couche stratigraphique. Cette information a priori a l'avantage d'être neutre, objective, car issue directement de l'information sismique, ce qui est un avantage certain en comparaison à d'autres informations a priori définies par des utilisateurs (comme dans les méthodes supervisées de détection d'objets homogènes, ou les méthodes supervisées de classification en faciès, décrites plus haut). Cependant, l'approche ne vise pas à rechercher des objets appartenant à un type particulier (tels que des MTDs ou des corps salins), et aucun post-traitement n'est fourni en ce sens.

On connaît également le document (Hashemi et al., 2017) qui utilise des cartes de faciès provenant d'une analyse de logs de puits comme contrainte. Il s'agit donc une contrainte spatiale. Pourtant, de même qu'au paragraphe précédent, la méthode ne permet pas de trouver des objets appartenant à un type particulier (tels que des MTDs ou des corps salins).

L'interprétation effectuée après une classification est illustrée dans le brevet US 9008972 B2. Une fois le jeu de données sismique classifié en régions portant chacune un label de classe (autrement dit un identifiant de classe), un nouveau classement (« ranking ») est donné aux différentes classes elles-mêmes, selon leur potentiel à valider un certain objectif. Ce « ranking » est créé par un interprétateur à partir d'un critère prédéfini ; l'interprétateur va (ré-) utiliser un attribut sismique (ou une combinaison d'attributs), ou un attribut non-physique mais correspondant à sa propre interprétation des classes. Cela donnera un « ranking » quantitatif des régions de l'image sismique, créé selon un objectif particulier (par exemple, classant les zones les plus susceptibles de représenter des pièges à hydrocarbures par ordre décroissant de probabilité). Ainsi, l'interprétateur doit être expert sur les attributs et algorithmes utilisés pour la classification de l'image sismique. De plus, les régions sont analysées une par une ; un objet qui serait représenté par un groupement de différentes classes ne pourrait pas être détecté dans cette approche.

Ainsi, ces algorithmes de clustering non- ou semi- supervisé ont un fort potentiel à classifier de grands jeux de données et à mettre en valeur toute la variabilité interne d'un jeu de donnée sans omettre des propriétés sismiques (ou faciès sismiques) plus rares que d'autres (contrairement aux méthodes supervisées). Cependant, ils n'incluent pas la détection d'objets géologiques. Aucune stratégie particulière n'est donnée pour la délinéation d'objets géologiques après avoir classifié entièrement les échantillons de l'image à traiter, même si des contraintes peuvent avoir été ajoutées lors du traitement (cas des méthodes semi-supervisées). Une étape manuelle pour rassembler les clusters en groupes d'intérêt pour l'interprétation est pour l'instant nécessaire, en tant que post-traitement, pour étudier/détecter des objets dans la donnée. Cette étape présente le risque de manquer d'objectivité, et de nécessiter beaucoup de temps et de connaissance (concernant le fonctionnement de l'algorithme de classification etc.) à l'interprétateur. En tout cas, notamment pour guider l'interprétation vers l'obtention d'objets géologiques délimités, cette étape manuelle est nécessaire dans les méthodes existantes.

Ainsi, les méthodes d'interprétation totalement automatisées d'images sismiques sont pour l'instant limitées à des objets à propriétés sismiques homogènes. Des méthodes existent pour représenter des faciès sismiques hétérogènes d'un jeu de données sismiques, mais pas pour détecter des objets constitués de faciès hétérogènes de manière automatique et objective.

La présente invention vise à pallier ces inconvénients en permettant une automatisation de la détection d'objets géologiques, en particulier des objets géologiques ayant des faciès sismiques hétérogènes. De plus la présente invention peut être paramétrée sur une image sismique d'apprentissage, les paramètres déterminés sur l'image d'apprentissage pouvant alors être appliqués à une autre image sismique, par exemple englobant l'image sismique d'apprentissage ou une image sismique provenant d'une campagne sismique voisine.

**Le procédé selon l'invention**

L'invention concerne un procédé mis en oeuvre par ordinateur pour la détection automatique d'au moins un objet géologique appartenant à un type d'objet géologique dans au moins une image sismique d'une formation souterraine, à partir de probabilités a priori d'appartenance audit type d'objet géologique attribuées à chacun des échantillons de ladite image.

Le procédé selon l'invention comprend au moins les étapes suivantes :

A. On définit une transformation de ladite image en une pluralité d'attributs sismiques et on applique ladite transformation pour déterminer une pluralité d'attributs sismiques de ladite image ;

B. On applique une classification non supervisée auxdits attributs sismiques de ladite image et on détermine une classe pour chacun desdits échantillons de ladite image ;

C. Pour chacune desdites classes, on détermine une probabilité a posteriori d'appartenance desdits échantillons de ladite classe audit type d'objet géologique en fonction desdites probabilités a priori desdits échantillons de ladite image appartenant à ladite classe, de ladite classe, et d'un paramètre $\alpha$ décrivant une confiance en lesdites probabilités a priori ;

D. Pour chaque échantillon de ladite image, à partir de ladite classe dudit échantillon, on attribue audit échantillon ladite probabilité a posteriori d'appartenance audit type d'objet géologique déterminée pour lesdits échantillons de ladite classe.

Puis, selon l'invention, on détecte ledit objet géologique appartenant audit type d'objet géologique à partir desdites probabilités a posteriori d'appartenance audit type d'objet géologique déterminées pour chacun desdits échantillons de ladite image.

Selon une mise en oeuvre de l'invention, ladite probabilité a posteriori $y_i$ probabilité a posteriori d'appartenance desdits échantillons de ladite classe $i$ audit type d'objet géologique peut être déterminée de la manière suivante :

i. si

$$p_{1,i} > \frac{1}{\alpha+1}, \, y_i = s_1.$$

ii. si $p_{1,i} \leq \frac{1}{\alpha+1}$, on détermine $q_i = max \left\{ k \in 1{:}n \text{ tels que } \sum_{j \in 1{:}k} p_{j,i} \leq \frac{1}{\alpha+1} \right\}$

    a. si $\sum_{j \in 1{:}q} p_{j,i} = \frac{1}{\alpha+1}$, alors $y_i = s_q$.

    b. si $\sum_{j \in 1{:}q} p_{j,i} < \frac{1}{\alpha+1}$, alors

     - si $q = n$, $y_i = s_n$

     - si $q < n$, $y_i = s_{q+1}$.

où

- $X$ un vecteur contenant une valeur de ladite probabilité d'appartenance a priori pour chaque échantillon de ladite image sismique ;

- $L$ un vecteur contenant pour chacun desdits échantillons de ladite image sismique un identifiant de ladite classe à laquelle ledit échantillon appartient ;

- $S = \{s_1, s_2, ... s_n\} = \{s_k, k \in 1{:}n\}$ avec $0 = s_1 < s_2 < ... < s_n = 1$, l'ensemble des valeurs prises par les éléments dudit vecteur $X$ ;

- $C_i$, $i \in L$ ladite classe d'identifiant $i$;

- $p_{k,i} = p(s_k|C_i)$, la proportion des points de $C_i$ ayant pour valeur de probabilité a priori $s_k$ ;

Avantageusement, lesdits attributs sismiques peuvent être des attributs texturaux.

Préférentiellement on peut appliquer une réduction de dimension auxdits attributs déterminés par ladite transformation.

Très préférentiellement, ladite réduction de dimension peut être réalisée au moyen d'une analyse en composantes principales.

Alternativement, ladite réduction de dimension peut être réalisée au moyen d'une analyse d'une méthode de sélection d'attributs.

Selon une mise en oeuvre de l'invention, ladite méthode de classification non supervisée peut être une méthode de cartes topographiques génératrices.

Selon une variante de mise en oeuvre de l'invention, on peut appliquer au moins lesdites étapes A) à D) à une première image sismique, puis on peut appliquer au moins lesdites étapes suivantes à une seconde image sismique :

I. on applique ladite transformation en attributs sismiques à ladite seconde image pour déterminer une pluralité d'attributs sismiques de ladite seconde image ;

II. on applique ladite classification non supervisée auxdits attributs de ladite seconde image et on détermine une classe pour chacun desdits échantillons de ladite seconde image;

III. pour chacune desdites classes de ladite seconde image et pour chacun desdits échantillons de ladite seconde image appartenant à ladite classe, on attribue ladite probabilité d'appartenance audit type d'objet géologique déterminée pour ladite classe sur ladite première image.

Selon une variante de mise en oeuvre de l'invention, on peut détecter lesdits objets géologiques appartenant audit type d'objet géologique dans ladite au moins une image au moyen d'une méthode de seuillage appliquée aux valeurs desdites probabilités a posteriori d'appartenance audit type d'objet géologique déterminées pour chacun desdits échantillons de ladite au moins une image.

L'invention concerne également un procédé d'exploitation d'une formation souterraine comprenant des hydrocarbures, au moyen d'au moins une image sismique relative à ladite formation, dans lequel :

- on détecte dans ladite image sismique des objets géologiques appartenant à au moins un type d'objet géologique au moyen du procédé tel que décrit ci-dessus ;

- on définit un modèle géologique représentatif de ladite formation à partir au moins desdits objets géologiques détectés et on définit un schéma d'exploitation desdits hydrocarbures de ladite formation à partir au moins dudit modèle géologique ;

- on exploite lesdits hydrocarbures de ladite formation selon ledit schéma d'exploitation.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux Figures annexées et décrites ci-après.

**Présentation succincte des Figures**

- la Figure 1 présente, sur un exemple théorique, la répartition des classes déterminées par une méthode de classification, par rapport à un objet géologique à détecter.

- Les Figures 2a et 2b présentent les échantillons de la classe C1 ayant une probabilité a priori d'appartenance à l'objet géologique à détecter respectivement de 0 et de 0.75.

- La Figure 2c présente de manière schématique la détermination de la probabilité a posteriori associée à la classe C1.

- La Figure 3a présente la répartition des échantillons appartenant à la classe C2, par rapport à l'objet géologique à détecter.

- La Figure 3b présente de manière schématique la détermination de la probabilité a posteriori associée à la classe C2.

- La Figure 4a présente la répartition des échantillons appartenant aux classes C4, C5 et C6, par rapport à l'objet géologique à détecter.

- La Figure 4b présente de manière schématique la détermination de la probabilité a posteriori associée aux classe classes C4, C5 et C6.

- La Figure 5a présente la répartition des échantillons appartenant à la classe C3, par rapport à l'objet géologique à détecter.

- La Figure 5b présente de manière schématique la détermination de la probabilité a posteriori associée à la classe C3.

- Les Figures 6 et 7 présentent respectivement trois sections sismiques d'apprentissage sélectionnées dans un volume sismique global et les probabilités a priori d'appartenance à un objet géologique de type MTD pour chacun des échantillons de ces sections.

- La Figure 8 présente la répartition des échantillons des trois images d'apprentissage de la Figure 6 selon 49 classes.

- La Figure 9 présente les probabilités a posteriori d'appartenance à un objet géologique de type MTD pour chacune des trois images d'apprentissage de la Figure 6, ces probabilités a posteriori ayant été déterminées selon le procédé selon l'invention.

- La Figure 10 présente le résultat de la propagation des probabilités a posteriori d'appartenance à un objet géologique de type MTD, déterminées pour chacune des trois images d'apprentissage de la Figure 6, à 72 sections dans le volume sismique global à interpréter.

- La Figure 11 présente les échantillons du volume sismique global à interpréter ayant été détectés comme appartenant à un objet géologique de type PTD, au moyen du procédé selon l'invention.

**Description détaillée du procédé**

De façon générale, l'un des objets de l'invention concerne un procédé mis en oeuvre par ordinateur pour la détection automatique des échantillons d'au moins une image sismique d'une formation souterraine qui appartiennent à un type d'objet géologique prédéfini. Le procédé selon l'invention peut être avantageusement appliqué à la détection d'un type d'objet géologique caractérisé par des propriétés sismiques hétérogènes, ou autrement dit à un type d'objet géologique caractérisé par des faciès sismiques hétérogènes. De tels faciès sismiques hétérogènes comprennent de manière non limitative des dépôts de transport de masse, couramment appelés MTD (« mass-transport deposits » en anglais), des chenaux fluviatiles aux propriétés sismiques hétérogènes, ou bien des biseaux géologiques (tel qu'un contact biseauté entre des couches géologiques inclinées et une surface d'érosion). Le procédé peut être toutefois également appliqué pour la détection d'objets géologiques connus comme ayant des propriétés sismiques homogènes, tels que les corps salins, notamment lorsque les faciès internes de ces objets varient légèrement.

Ainsi le procédé selon l'invention est mis en oeuvre pour un type d'objet géologique donné, et est avantageusement répété si la détection d'un autre type d'objet géologique dans la même image sismique est souhaité.

L'image sismique est indifféremment une image bi-dimensionnelle (2D) ou tridimensionnelle (3D), où l'un des axes serait l'axe des temps (image sismique dans le domaine temporel) ou bien l'axe des profondeurs (image sismique dans le domaine profondeur), et le ou les autres axes correspondraient aux axes horizontaux d'un espace géographique. Le procédé selon l'invention peut être également mis en oeuvre sur une pluralité d'images sismiques, 2D et/ou 3D. Cette ou ces images sismiques peuvent avoir été obtenues au moyen de mesures sismiques (de manière générale, on parle de « campagne d'acquisition sismique ») et d'un traitement de ces mesures sismiques (de manière générale, on parle de « traitement sismique »). Le spécialiste a parfaite connaissance des étapes à mettre en oeuvre pour obtenir une image sismique d'une formation souterraine.

Le procédé selon l'invention requiert de disposer de probabilités a priori d'appartenance au type d'objet géologique recherché, ces probabilités étant attribuées à chacun des échantillons de l'image sismique considérée. Autrement dit, chaque échantillon (un pixel dans le cas d'une image sismique bi-dimensionnelle, un voxel dans le cas d'une image sismique tridimensionnelle) de l'image sismique considérée doit avoir une valeur représentative de la probabilité que cet échantillon appartienne à un objet géologique du type recherché.

Selon un mode de réalisation de l'invention non limitatif, le procédé peut comprendre les étapes suivantes :

1. Détermination de probabilités a priori dans l'image sismique

2. Détermination d'attributs sismiques sur l'image sismique

3. Classification de l'image sismique dans l'espace des attributs

4. Détermination d'une probabilité d'appartenance a posteriori

5. Propagation des probabilités a posteriori à une autre image sismique

6. Détection automatique des objets géologiques

7. Exploitation de la formation souterraine

Toutefois, de manière générale, le procédé selon l'invention comprend au moins les étapes 2 à 4 et l'étape 6.

Ainsi, les moyens d'obtention de probabilités d'appartenance a priori, nécessaires à la mise en oeuvre de l'invention, peuvent être obtenues par la mise en oeuvre de l'étape 1 qui est optionnelle.

Selon une mise en oeuvre de l'invention avantageuse lorsque de gros volumes de données sismiques sont à interpréter, les étapes 2 à 4 sont appliquées sur au moins une image sismique qui est une image sismique d'apprentissage, et les paramètres du procédé déterminés sur cette image sismique d'apprentissage sont ensuite appliqués, tel que décrit à l'étape 5, à au moins une seconde image sismique, par exemple de dimension plus grande que l'image sismique d'apprentissage. Ainsi, dans le cas d'une image sismique 2D à interpréter, l'image sismique d'apprentissage peut par exemple correspondre à une fenêtre prise dans l'image sismique globale, de plus grande dimension. Dans le cas d'une image sismique 3D à interpréter, l'apprentissage peut être réalisé sur une série de sections sismiques 2D choisies parmi l'image volumique 3D, ou bien un ou plusieurs sous-volumes 3D pris dans ce volume sismique 3D.

L'étape 7, également optionnelle, concerne l'exploitation de la formation souterraine pour laquelle une image sismique a été interprétée au moyen au moins des étapes 2 à 4.

Les étapes de la mise en oeuvre non limitative du procédé selon l'invention décrite ci-dessus sont détaillées ci-après, les étapes 1, 5 et 7 étant optionnelles.

**1. Détermination de probabilités a priori dans l'image sismique**

Cette étape est optionnelle, car des probabilités d'appartenance a priori au type d'objet géologique que l'on cherche à détecter peuvent avoir été préalablement déterminées et sont alors fournies en entrée du procédé selon l'invention.

Au cours de cette étape, il s'agit de délimiter des régions au sein de l'image sismique étudiée (qui peut aussi être une image sismique d'apprentissage) et d'attribuer à ces régions une probabilité d'appartenance à l'objet géologique recherché, ou autrement dit une probabilité d'appartenance a priori au type d'objet géologique que l'on cherche à détecter.

Selon une mise en oeuvre de l'invention, on utilise une méthode de délimitation automatique d'objets géologiques, méthode alternative au procédé selon l'invention, consistant par exemple à (i) calculer un attribut sismique choisi pour être (au moins partiellement) discriminant pour au moins une partie des objets recherchés ; (ii) normaliser les valeurs de l'attribut entre 0 et 1 ; (iii) assigner ce résultat à chaque région de l'image sismique en tant que probabilité a priori.

Selon une autre mise en oeuvre de l'invention, on peut aussi déterminer des probabilités d'appartenance a priori au type d'objet géologique recherché en utilisant d'autres types d'information qu'une information sismique, comme par exemple des mesures diagraphiques réalisées dans au moins un puits traversant la formation étudiée. Selon une mise en oeuvre de l'invention, on peut par exemple : (i) pour chaque puits dans lequel une mesure diagraphique a été réalisée, déterminer un log de faciès géologiques à partir d'un traitement classique de mesures diagraphiques et en déduire une proportion de présence de l'objet à détecter en fonction de la profondeur le long du puits étudié, (ii) propager cette information déterminée aux différents puits dans tout ou partie de l'espace couvert par l'image sismique à interpréter, au moyen d'une interpolation ou par le biais d'une méthode géostatistique ; (iii) assigner ce résultat, normalisé entre 0 et 1, à chaque région de l'image sismique, en tant que probabilité a priori.

Selon une mise en oeuvre de l'invention, on délimite des régions dans l'image sismique considérée (qui peut être éventuellement une image d'apprentissage) au moyen d'une interprétation manuelle et/ou automatique des objets géologiques de l'image sismique considérée et on attribue à chacune de ces régions une probabilité d'appartenance à l'objet géologique recherché. Selon une mise en oeuvre de l'invention :

- on attribue une valeur de probabilité d'appartenance a priori de 1 pour les échantillons de l'image sismique appartenant à des régions pour lesquelles on pense que la région délimitée correspond au type d'objet géologique recherché ;
- on attribue une valeur de probabilité d'appartenance a priori de 0 pour les échantillons de l'image sismique appartenant à des régions pour lesquelles on pense que la région délimitée ne correspond pas, de façon certaine, au type d'objet géologique recherché ;
- on attribue des valeurs de probabilités intermédiaires (par exemple des valeurs de 0.25, 0.5, 0.75) pour les autres régions, en fonction de la vraisemblance de leur appartenance au type d'objet géologique recherché.

**2. Détermination d'attributs sismiques sur l'image sismique**

Au cours de cette étape, on définit une transformation de l'image sismique (qui peut aussi être une image sismique d'apprentissage) en une pluralité d'attributs sismiques et on applique la transformation ainsi définie pour déterminer une pluralité d'attributs sismiques associés à l'image sismique considérée. Avantageusement, on détermine au moins quatre attributs sismiques, ce qui permet potentiellement de distinguer $2^4$ = 16 types de faciès sismiques différents, et ainsi de caractériser des objets géologiques ayant des propriétés sismiques particulièrement hétérogènes. Avantageusement, on choisit des attributs de telle sorte qu'ils représentent la variabilité des faciès sismiques de l'image sismique considérée.

De manière préférée, les attributs sismiques déterminés comprennent des attributs texturaux, qui sont des attributs dont la valeur en chaque échantillon caractérise la texture de l'image au voisinage de cet échantillon. La valeur en chaque échantillon est en général une grandeur statistique de la distribution des valeurs des amplitudes sismiques dans un voisinage latéral et vertical de l'échantillon de l'image sismique (par exemple prise en compte des statistiques du second ordre au voisinage de chaque échantillon d'une image sismique). Ainsi, ce type d'attributs est particulièrement approprié pour distinguer différents types de faciès sismiques dans une image sismique car ils fournissent une information sur l'organisation locale des réflecteurs de manière fine dans une image. Parmi les attributs texturaux, on connaît les attributs issus de la matrice de co-occurrence de niveaux de gris (« Gray-Level Co-occurrence Matrix » en anglais, ou GLCM). Les attributs GLCM ont été initialement introduits (cf. par exemple le document (Haralick, 1973)) pour le traitement d'image en général, et sont dorénavant largement répandus en interprétation sismique. Le calcul d'un attribut se fait sur une image en niveaux de gris, pour une orientation theta et une distance inter-pixel d prédéfinies. Ce calcul se fait en deux étapes : d'abord la construction de la matrice de co-occurrence M(r,c), qui indique, pour chaque couple (r,c) de niveaux de gris, le nombre de paires de pixels dans la fenêtre de voisinage d'un pixel (ou échantillon de l'image sismique) qui sont séparés par un vecteur de norme d et d'angle theta et ayant pour niveaux de gris r et c ; puis le calcul de grandeurs statistiques sur cette matrice. De manière générale, les attributs texturaux présentent aussi l'avantage d'être calculés selon un même schéma de calcul, si bien qu'en les calculant tous, on 'scanne' tous les motifs possibles (par exemple, avec les attributs GLCM, on calcule un un attribut par orientation, tous calculés de la même manière).

Selon une autre mise en oeuvre de l'invention, les attributs sismiques déterminés comprennent des attributs spectraux, ce type d'attributs portant aussi de l'information sur les échelles de taille. Selon une autre mise en oeuvre de l'invention, on peut aussi utiliser des attributs sismiques classiques en interprétation sismique comme la cohérence, ou encore l'auto-corrélation.

Selon une mise en oeuvre de l'invention, si les valeurs des attributs sismiques déterminés ne sont pas du même ordre de grandeur (par exemple s'il y a un rapport de 1 sur 10 entre deux attributs), on normalise les valeurs des attributs ainsi déterminés.

Selon une mise en oeuvre de l'invention, s'il s'avère que les attributs ainsi déterminés sont corrélés entre eux, on réalise une opération de réduction de dimension des attributs déterminés. On peut pour ce faire appliquer aux attributs déterminés une méthode d'extraction d'attributs (« Feature extraction method » en anglais), telle qu'une Analyse en Composantes Principales (ACP, ou « Principal Component Analysis » en anglais), ou une méthode de sélection d'attributs (« Feature selection method » en anglais). Selon une mise en oeuvre avantageuse de l'invention dans laquelle on applique la méthode ACP, on conserve uniquement les attributs projetés dans le repère des vecteurs propres issus de l'ACP dont la somme des valeurs propres normalisées est supérieure à 0.95. Selon une mise en oeuvre de l'invention selon laquelle on applique une méthode de sélection d'attributs, on conserve une sélection des attributs initiaux, la sélection étant définie de manière à ce que les attributs sélectionnés représentent la variance totale (ou un pourcentage de 0.95 par exemple) du nuage de points et soient le moins corrélés possible (l'optimisation de la sélection d'attributs consiste donc à minimiser la corrélation du jeu sélectionné tout en maximisant la variance représentée).

### 3. Classification de l'image sismique dans l'espace des attributs

Au cours de cette étape, on applique une méthode de classification de type non supervisée aux attributs sismiques déterminés à l'issue l'étape 2 décrite ci-dessus, i.e. éventuellement aux attributs après réduction de dimension. Ainsi, au cours de cette étape, on considère l'image sismique dans l'espace multi-attributs, et non plus l'image sismique exprimée en amplitude sismique.

Selon l'invention, on réalise la classification des attributs issus de l'image sismique au moyen d'un algorithme de Self-Organizing Maps (SOM) tel que décrit par exemple dans (Kohonen 1989), ou bien un algorithme de Generative Topographic Mapping (GTM) tel que décrit par exemple dans (Bishop, 1998), ou encore un algoritme de K-means tel que décrit par exemple dans le document (Lloyd, 1982). Dans le cas d'une méthode SOM ou GTM, la classification consiste à créer une représentation non linéaire de la donnée par une variété de petite dimension (typiquement 2), dans laquelle se trouve une grille (potentiellement irrégulière) contenant les centres de classes. Au cours de la mise en oeuvre de l'algorithme SOM ou GTM, les positions des centres de classes dans la variété et dans l'espace des données sont optimisées (et dans le cas de GTM, la variété elle-même est paramétrée). Pour ce type d'approches, le nombre de classes est prédéfini par avance par le spécialiste. Le spécialiste a parfaite connaissance de la manière de définir un nombre de classes ad hoc pour la mise en oeuvre d'une méthode de classification de type non supervisée.

A l'issue de cette étape de classification, une classe est assignée à chaque échantillon (un pixel dans une image 2D, ou un voxel dans une image sismique 3D) de l'image sismique considérée. Autrement dit, chaque échantillon de l'image sismique considérée possède un « label » de classe, ou encore un identifiant de la classe à laquelle il appartient. De manière classique, l'identifiant de la classe de chaque échantillon de l'image sismique est un numéro de classe.

**4. Détermination d'une probabilité d'appartenance a posteriori**

Selon l'invention, il s'agit d'assigner, à chaque classe obtenue à l'issue de l'étape précédente, une probabilité a posteriori d'appartenance au type d'objet géologique recherché. Cette probabilité a posteriori est estimée en fonction :

- des probabilités a priori d'appartenance à l'objet géologique recherché, déterminées par exemple comme décrit à l'étape 1 ; et

- du partitionnement en classes déterminé à l'issue de l'étape 3 ; et

- d'un paramètre a, prédéfini (notamment par le spécialiste), qui permet de qualifier la confiance en la qualité de l'interprétation a priori des objets géologiques de l'image sismique (qui peut aussi être une image sismique d'apprentissage). Selon une mise en oeuvre de l'invention, le paramètre $\alpha$ pour une image sismique donnée est compris entre 0 et 1, la valeur 0 étant attribuée dans le cas d'une interprétation a priori des objets géologiques très peu fiable, et 1 étant au contraire attribuée dans un cas où la confiance en l'interprétation est forte. Le paramètre $\alpha$ peut aussi être utilisé afin de donner une certaine « souplesse » à l'algorithme de détection selon l'invention (0 pour une grande souplesse et 1 pour aucune souplesse). Le paramètre $\alpha$ peut aussi permettre de prendre en compte les potentielles absences d'annotations de certains objets, par exemple si l'on pense que des objets géologiques, correspondant au type d'objet à détecter, n'ont pas été interprétés a priori dans l'image sismique (éventuellement d'apprentissage).

Par la suite, on note :

- $X$ le vecteur contenant une valeur de probabilité d'appartenance a priori pour chaque échantillon de l'image sismique considérée ;

- $L$ le vecteur contenant pour échantillon de l'image sismique considérée l'identifiant de la classe à laquelle l'échantillon appartient ;

- $S = \{s_1, s_2, \dots s_n\} = \{s_k, k \in 1{:}n\}$ avec $0 = s_1 < s_2 < \dots < s_n = 1$, l'ensemble des valeurs prises par les éléments de $X$ ;

- $C_i, i \in L$ la classe numéro $i$ de la classification décrit par $L$ ;

- $p_{k,i} = \mathrm{p}(s_k|C_i)$, la proportion des points de $C_i$ ayant pour valeur de probabilité a priori $s_k$ ;

- $Y$ le vecteur contenant pour chaque échantillon de l'image considérée la probabilité a posteriori.

Selon une mise en oeuvre préférée de l'invention, on détermine la probabilité a posteriori $y_i$ d'appartenance au type d'objet géologique recherché pour chaque classe numéro i de la classification décrite par L de la manière décrite ci-après :

- si $p_{1,i} > \dfrac{1}{\alpha+1}$, $y_i = s_1$.

- Si $p_{1,i} \leq \dfrac{1}{\alpha+1}$, on détermine :

$$q_i = max\left\{k \in 1{:}n \text{ tels que } \sum_{j \in 1:k} p_{j,i} \leq \frac{1}{\alpha+1}\right\}, \text{ et}$$

  a. si $\sum_{j \in 1:q} p_{j,i} = \dfrac{1}{\alpha+1}$, $y_i = s_{q}$.

  b. si $\sum_{j \in 1:q} p_{j,i} < \dfrac{1}{\alpha+1}$,

- si q = $n$, $y_i$ = $s_n$

- si q < $n$, $y_i$ = $s_{q+1}$.

Ainsi, le procédé selon l'invention permet d'exploiter à la fois une probabilité d'appartenance a priori ainsi qu'une information sur la structure du jeu de données, représentée par le résultat de la classification, tout en tenant compte d'un degré de confiance en l'interprétation a priori prédéfini par le spécialiste.

A l'issue de cette étape, on obtient une valeur unique de probabilité a posteriori par classe, qui se rapproche de la moyenne arithmétique des probabilités a priori de tous les échantillons de la classe (notamment on a l'égalité avec la moyenne arithmétique dans le cas où le paramètre $\alpha$ vaut 1) mais qui peut inclure une certaine souplesse, via le paramètre $\alpha$, en fonction de la confiance dans l'interprétation réalisée a priori.

Puis on attribue à chaque échantillon de l'image sismique considérée une probabilité a posteriori d'appartenance à l'objet géologique recherché, en fonction de la classe (par exemple identifiée par un identifiant de classe) à laquelle appartient l'échantillon considéré.

### 5. Propagation des probabilités a posteriori à une autre image sismique

Cette étape est optionnelle. Elle s'applique dans le cas où les probabilités a priori d'appartenance à l'objet géologique recherché ont été prédéfinies sur une image sismique d'apprentissage, telle que définie ci-dessus, et que la détection automatique des objets géologiques du type considéré est souhaitée sur une autre image sismique, appelée par la suite « image sismique globale ». Il est bien évident pour le spécialiste que l'image sismique d'apprentissage et l'image sismique globale ont, de manière préférée et autant que faire se peut, des paramètres sismiques similaires. Par exemple, les données sismiques à l'origine de ces deux images sismiques doivent de préférence avoir été enregistrées avec les mêmes paramètres d'acquisition (notamment les pas d'échantillonnage) ou avoir été corrigées de manière à se ramener aux mêmes paramètres d'acquisition (ce type de correction est classiquement fait en traitement sismique 4D par exemple). Egalement, les données sismiques à l'origine de ces deux images sismiques doivent de préférence avoir subi le même traitement sismique ou avoir été corrigées de manière à se ramener au même traitement sismique (ce type de correction est classiquement fait en traitement sismique 4D par exemple) ; il est en effet important que les amplitudes sismiques des images d'apprentissage et de l'image globale à interpréter soient dans des gammes similaires. Le spécialiste a parfaite connaissance de ces contraintes et des moyens pour y parvenir, par des méthodes de traitement sismique de routine.

A l'issue de l'étape 4, on obtient notamment des probabilités a posteriori d'appartenance à l'objet géologique recherché, associées à chacune des classes déterminées sur l'image sismique d'apprentissage. Au cours de cette étape, il s'agit alors de « propager » ces probabilités a posteriori, déterminées sur l'image sismique d'apprentissage, à l'image sismique globale.

Selon l'invention, cette propagation est réalisée de la manière suivante :

I. on applique la transformation en attributs sismiques, telle que définie à l'étape 2 et appliquée à l'image sismique d'apprentissage, à l'image sismique globale. On détermine alors une pluralité d'attributs sismiques de l'image sismique globale, attributs qui sont les mêmes (en type et en nombre) que ceux déterminés sur l'image d'apprentissage. De manière préférée, les post-traitements (normalisation, réduction de dimension ; cf. étape 2 ci-dessus) appliqués aux attributs déterminés pour l'image sismique d'apprentissage sont avantageusement appliqués également aux attributs de l'image sismique globale, en utilisant les mêmes paramètres d'opérations de post-traitement que ceux utilisés pour l'image sismique d'apprentissage.

II. on applique la méthode de classification non supervisée, telle que définie à l'étape 3 et appliquée aux attributs de l'image sismique d'apprentissage, aux attributs de l'image sismique globale. On applique ici la même méthode de classification que celle appliquée à l'étape 3 sur l'image d'apprentissage, paramétrée de la même manière, et notamment avec le même nombre de classes. On obtient ainsi par exemple un identifiant de classe pour chaque échantillon de l'image sismique globale.

III. pour chacune des classes de l'image sismique globale et pour chacun des échantillons de cette image sismique globale appartenant à cette classe (par exemple identifiée par un identifiant de classe), on attribue la probabilité a posteriori d'appartenance déterminée pour cette classe sur l'image sismique d'apprentissage.

Ainsi, à l'issue de cette étape, on obtient des probabilités a posteriori d'appartenance à l'objet géologique recherché pour une image sismique globale, à partir de probabilités a posteriori d'appartenance à l'objet géologique recherché déterminées sur une image sismique d'apprentissage. Ceci permet notamment un gain de temps important lorsque des gros volumes de données sismiques sont à interpréter car la détermination des probabilités a posteriori d'appartenance est faite finement seulement sur l'image sismique d'apprentissage. Cette mise en oeuvre de l'invention permet également de limiter la taille de la mémoire informatique utilisée pour la détermination des probabilités d'appartenance a posteriori.

## 6. Détection automatique des objets géologiques

Au cours de cette étape, il s'agit de détecter de manière automatique, à partir des probabilités a posteriori d'appartenance à l'objet géologique recherché déterminées à l'étape 4 et/ou 5, les objets géologiques du type recherché dans l'image sismique d'intérêt.

Cette détection peut être appliquée avec tout type de méthode connue pour la détection automatique d'objets géologiques ayant des propriétés internes homogènes, car les valeurs de probabilité a posteriori que l'on a ainsi déterminées peuvent alors servir d'attributs pour la mise en oeuvre de ce type de méthode. Autrement dit, le procédé selon l'invention permet, à partir d'une information sismique très hétérogène et complexe, de déterminer une image ayant des propriétés plus homogènes, rendant l'application de méthodes de détection d'objets géologiques ayant des propriétés internes homogènes possible.

Selon une mise en oeuvre de l'invention, on peut, à partir des valeurs de probabilités d'appartenance a posteriori pour chaque échantillon de l'image sismique considérée, détecter de manière automatique les objets géologiques de cette image du type de celui recherché par les méthodes suivantes :

- on effectue un seuillage sur les valeurs de probabilités a posteriori : par exemple, on ne conserve que les échantillons de l'image sismique ayant des valeurs de probabilités a posteriori supérieures à 0.8 ; et/ou

- on utilise un algorithme de croissance de région, mis en oeuvre avec un critère prédéfini portant sur les valeurs de probabilités d'appartenance a posteriori attendues à l'intérieur des objets du type de l'objet à détecter. On pourra se référer au document (Adams et Bishof, 1994) qui décrit ce type de méthode. De manière générale, un algorithme de croissance de régions consiste à définir les points de départ (« seeds » en anglais) des régions, puis à faire croître ces régions via une mesure de similarité entre échantillons, jusqu'à ce qu'un critère d'arrêt soit atteint. Il est bien connu que ces méthodes sont performantes lorsque les points de départ sont choisis dans des zones homogènes de l'image à interpréter.

- on utilise un algorithme de détection de contours, à formulation explicite ou implicite. On pourra se référer au document (Mumford et Shah, 1989) qui décrit ce type de méthode de manière générale.

## 7. Exploitation de la formation souterraine

A partir au moins des objets géologiques détectés par la mise en oeuvre d'au moins les étapes 2 à 4 et 6 décrites ci-dessus pour au moins un type d'objet géologique à détecter, on dispose d'informations précieuses relatives à la formation souterraine dont on cherche à exploiter par exemple les hydrocarbures.

En effet, il est notamment classique de construire une représentation maillée de la formation étudiée, représentation connue sous le terme de géo-modèle, en vue de l'exploitation de cette formation. Chaque maille de cette représentation maillée est remplie par une ou plusieurs propriétés pétro-physiques, telles que la porosité, la perméabilité, le type de dépôt sédimentaire etc. Cette représentation maillée reflète notamment la géométrie des objets géologiques rencontrés dans la formation étudiée. Elle est ainsi le plus souvent structurée en couches, c'est-à-dire qu'un groupe de mailles est affecté à chaque couche géologique du bassin modélisé. Mais elle reflète avantageusement la présence d'objets géologiques de plus petite taille (tels que des MTDs, des chenaux fluviatiles, etc), par des mailles ayant des propriétés pétro-physiques distinctes des couches dans lesquelles ces objets sont encaissés. De manière générale, la construction de ce modèle se base sur des données acquises au cours de campagnes sismiques, de mesures dans des puits, de carottages, etc. Ainsi, les informations obtenues par la mise en oeuvre du procédé selon l'invention, en améliorant la connaissance des objets géologiques présents dans la formation, vont contribuer à construire un modèle géologique plus précis de la formation étudiée.

A partir d'une telle représentation maillée, le spécialiste peut notamment sélectionner les zones d'intérêt de la formation souterraine, et notamment les réservoirs géologiques susceptibles de générer une production élevée d'hydrocarbures (sur la base de critères comme une forte porosité, une forte perméabilité, la présence d'une roche couverture, etc.). A partir d'une telle représentation maillée, le spécialiste peut aussi prédire les déplacements de fluide dans la formation étudiée et planifier son développement futur, via la détermination de schémas d'exploitation de la formation. En particulier, la détermination d'un schéma d'exploitation d'une formation souterraine comprend la définition d'un nombre, d'une géométrie et d'une implantation (position et espacement) de puits injecteurs et producteurs, la détermination d'un type de récupération assistée (par injection d'eau, de tensio-actifs, etc.), etc. Un schéma d'exploitation d'un réservoir d'hydrocarbures doit par exemple permettre un fort taux de récupération des hydrocarbures piégés dans le réservoir géologique identifié, sur une longue durée d'exploitation, nécessitant un nombre de puits et/ou d'infrastructures limité. De manière classique, la détermination d'un schéma d'exploitation des hydrocarbures est réalisée à l'aide d'un simulateur numérique d'écoulement. Un exemple d'un simulateur d'écoulement est le logiciel PumaFlow® (IFP Energies nouvelles, France).

Puis, une fois un schéma d'exploitation défini, les hydrocarbures piégés dans le réservoir sont exploités en fonction de ce schéma d'exploitation, notamment en forant les puits injecteurs et/ou producteurs du schéma d'exploitation ainsi déterminé, et en installant les infrastructures de production nécessaires au développement du gisement.

**Equipement et produit programme d'ordinateur**

Le procédé selon l'invention est mis en oeuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

Les moyens de traitement de données sont notamment configurés pour réaliser les étapes suivantes :

-    on détermine une pluralité d'attributs sismiques de l'image sismique ;

-    on applique une méthode de classification non supervisée aux attributs sismiques ;

-    on détermine une probabilité a posteriori d'appartenance au type d'objet géologique recherché pour les échantillons de chacune des classes ;

-    on détermine une probabilité a posteriori d'appartenance au type d'objet géologique recherché pour chacun des échantillons de l'image sismique ;

-    et on détecte au moins un objet géologique du type recherché à partir des probabilités a posteriori d'appartenance pour chaque échantillon de l'image sismique.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit précédemment, lorsque ledit programme est exécuté sur un ordinateur.

**Variante : obtention préalable d'une image sismique**

Le procédé selon l'invention est mis en oeuvre sur au moins une image sismique d'une formation souterraine. Selon une variante de réalisation de l'invention, on détermine une image sismique préalablement à la mise en oeuvre du procédé selon l'invention. L'obtention d'une telle image sismique comprend une étape de mesures sismiques, puis une étape de traitement sismique de ces mesures sismiques.

L'étape de mesures sismiques est réalisée au moyen d'un dispositif de mesures sismiques. Ce dispositif de mesures sismiques comprend des moyens (tels que de l'explosif ou un vibrateur en sismique terrestre, un canon à air ou un canon à eau en sismique marine) pour émettre une ou plusieurs ondes sismiques dans la formation souterraine d'intérêt, ainsi que des moyens (tels que des capteurs d'accélération (sismomètres), de vibration (géophones), de pression (hydrophones), ou par une combinaison de capteurs élémentaires des types précédents (par exemple des capteurs multi-composantes)) pour enregistrer les ondes ainsi émises et s'étant au moins partiellement réfléchies dans la formation étudiée. Le spécialiste a parfaite connaissance des moyens pour acquérir des mesures sismiques en vue de produire une image sismique d'une formation souterraine.

L'étape de traitement sismique est appliquée sur les mesures sismiques ainsi réalisées sur la formation souterraine étudiée. En effet, les mesures sismiques enregistrées tel que décrit ci-dessus sont bien souvent inexploitables. De manière classique, le traitement sismique peut comprendre une étape de correction des amplitudes sismiques enregistrées, une déconvolution, des corrections statiques, un filtrage du bruit (aléatoire ou cohérent), une correction NMO (« Normal Move Out » en anglais, « Courbure Normale » en français), un stack (ou « sommation » en français), et une migration (profondeur ou temps, avant sommation ou après sommation). Ces étapes de traitement, nécessitant des calculs souvent complexes et longs, sont réalisées sur ordinateur. Les données sismiques résultantes sont alors appelées image sismique. Ces images sismiques sont le plus souvent représentées sur un ordinateur, par un maillage ou grille, chaque maille correspondant à une position latérale et verticale (la direction verticale correspondant au temps ou à la profondeur selon que le traitement a abouti à une image temps ou à une image profondeur) au sein de la formation étudiée, et étant caractérisée par une amplitude sismique. Le spécialiste a parfaite connaissance des moyens pour appliquer un traitement sismique ad hoc à des mesures sismiques afin de produire une image sismique d'une formation souterraine, image destinée à une interprétation sismique.

**Exemples de réalisation**

Les caractéristiques et avantages du procédé selon l'invention apparaîtront plus clairement à la lecture des exemples d'application ci-après.

**Premier exemple**

Il s'agit dans cet exemple d'illustrer, sur un exemple purement théorique, le principe du procédé selon l'invention.

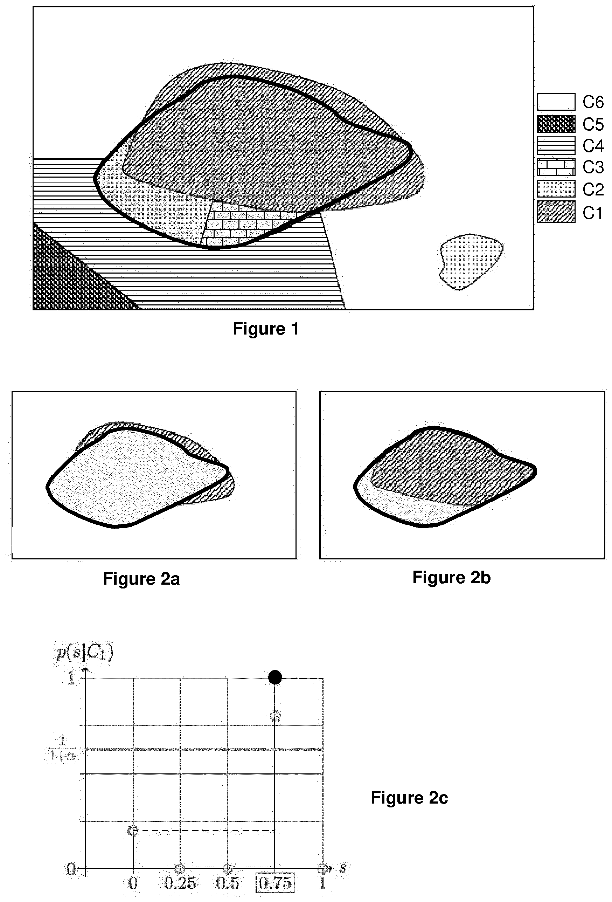

La Figure 1 présente un objet géologique (contour en gras) qui a été délimité par un spécialiste de manière manuelle dans une image sismique, ainsi que les classes (classes C1 à C6) résultant de l'application d'une méthode de classification appliquée. Les probabilités a priori sont discrétisées comme suit $[s_1,s_2,s_3,s_4,s_5]$ = [0, 0.25, 0.5, 0.75, 1]. La probabilité $s_4$ a été attribuée à l'intérieur de la zone contourée, et la probabilité $s_1$ a été attribuée aux échantillons en dehors de ce contour. Ainsi, pour cet exemple, seulement deux valeurs de probabilité sont représentées dans la distribution globale de probabilités a priori.
On considère dans cet exemple que le risque d'avoir oublié d'interpréter un objet géologique du type recherché sur l'image sismique est d'environ 40 pour cent. Selon le mode de réalisation défini ci-dessus, cela revient à fixer $\alpha$=0.6 (pour rappel, $\alpha$=1 correspond au cas où l'interprétateur est sûr d'avoir repéré tous les objets).
Les probabilités a posteriori par classe sont examinées ci-après

**• Classe 1** :

La classe 1 correspond au motif C1 de la Figure 1. La probabilité que le contour préalablement réalisé corresponde à des points de l'objet recherché a été estimée à 0,75. En dehors de cette surface, la probabilité est de 0. Il faut donc, à présent, estimer la proportion de points de la classe 1 dans chacune des zones de probabilité a priori, i.e. la proportion $p_{4,1} = p(s_4|C_1)$ de pixels de $C_1$ qui sont dans la zone de probabilité a priori $s_4 = 0.75$, et la proportion $p(s_1|C_1)$ de pixels de $C_1$ qui sont dans la zone de probabilité a priori $s_1 = 0$. Les autres valeurs de probabilité a priori ne sont pas représentées dans $C_1$, donc les proportions $p(s_2|C_1)$, $p(s_3|C_1)$ et $p(s_5|C_1)$ sont toutes nulles. Pour cet exemple, l'aire de la surface segmenté ayant une probabilité a priori de 0 est faible (cf. portion hachurée dans la Figure 2a). L'aire de la surface segmentée ayant une probabilité a priori 0.75 est plus importante (cf. portion hachurée dans la Figure 2b). Le calcul de $y_1$, probabilité a posteriori associée à la classe 1, tient compte de cette distribution de valeurs et est illustré schématiquement sur la Figure 2c. Pour chaque valeur $s_k$ de probabilité a priori, la proportion de points de la classe 1 ayant cette valeur $s_k$ est représentée par un bâton surmonté d'un disque grisé. La valeur cumulée de ces proportions ($\sum^{j\in 1:k} p_{j,1}$) est représentée par la ligne tiretée, et le disque noir représente le premier point de la courbe de distribution cumulée supérieur à $\frac{1}{\alpha+1}$. En effet, la valeur de $\frac{1}{\alpha+1}$ détermine le seuil pour la recherche de $q$ tel que défini en section 4 ci-dessus. Comme $p_1 \leq \frac{1}{\alpha+1}$, on détermine $q$, (en l'occurrence $q$ = 3) et la probabilité a posteriori $y_1$ de la classe $C_1$ est donc $s_{q+1}$ = 0.75.

**• Classe 2**

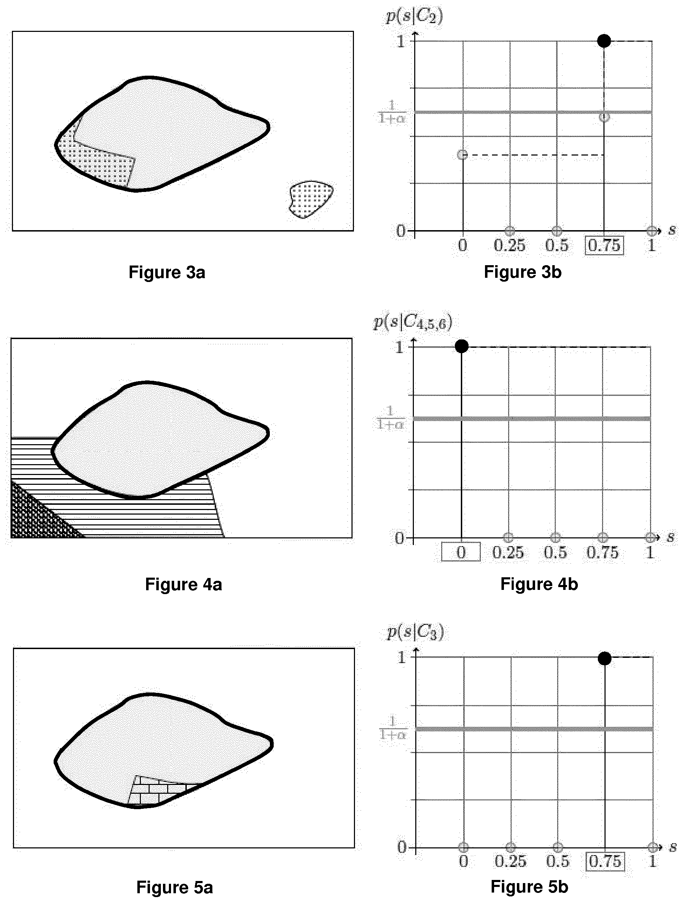

La mise en oeuvre du procédé selon l'invention pour la classe 2 (motif C2 dans la Figure 1) est identique à celle présentée pour la classe 1. La Figure 3a illustre la répartition des échantillons de l'image appartenant à la classe 2 (cf motif C2 dans la Figure 1), par rapport à l'objet préalablement interprété (délimité par le contour en gras). Le calcul de $y_2$, probabilité a posteriori associée à la classe 2, tient compte de cette distribution de valeurs et est illustré schématiquement sur la Figure 3b. La valeur seuil $\frac{1}{\alpha+1}$ est comparée à la courbe de distribution cumulée ($\sum^{j\in 1:k} p_{j,1}$) et la probabilité a posteriori $y_2$ de la classe $C_2$ est donc $s_{q+1}$ = 0.75.

• **Classes 4, 5, et 6**

On applique le procédé selon l'invention aux classes 4, 5 et 6 (motifs C4, C5 et C6 en Figure 1). La Figure 4a illustre la répartition des échantillons de l'image appartenant à ces classes (cf. motifs C4, C5 et C6 dans la Figure 1). Dans ces trois cas, l'intersection entre les zones pour lesquelles la probabilité a priori de présence d'un objet d'intérêt et les zones résultant de l'étape de classification est vide. Ainsi, $p_1 > \frac{1}{\alpha+1}$, ce qui implique que $y_{4,5,6} = 0$. En d'autres termes, le premier point de la courbe de distribution cumulée étant au-dessus du seuil $\frac{1}{\alpha+1}$, tous les points de ces zones prennent comme probabilité a posteriori l'abscisse de ce premier point, soit $s_1 = 0$, tel qu'illustré sur la Figure 4b.

• **Classe 3**

Enfin, la classe 3 (cf motif C3 dans la Figure 1) ne recoupe qu'une seule surface de probabilité a priori, tel que présenté en Figure 5a, mais, contrairement aux classes 4, 5 et 6, tous ses points se trouvent à la probabilité a priori $s_4 = 0.75$. La courbe de distribution cumulée (cf. Figure 5b) ne quitte le zéro qu'au niveau de 0.75. Par conséquent, $s_q = 0.5$ et la probabilité a posteriori retenue pour la classe 3 est $s_{q+1} = 0.75$.

**Second exemple**

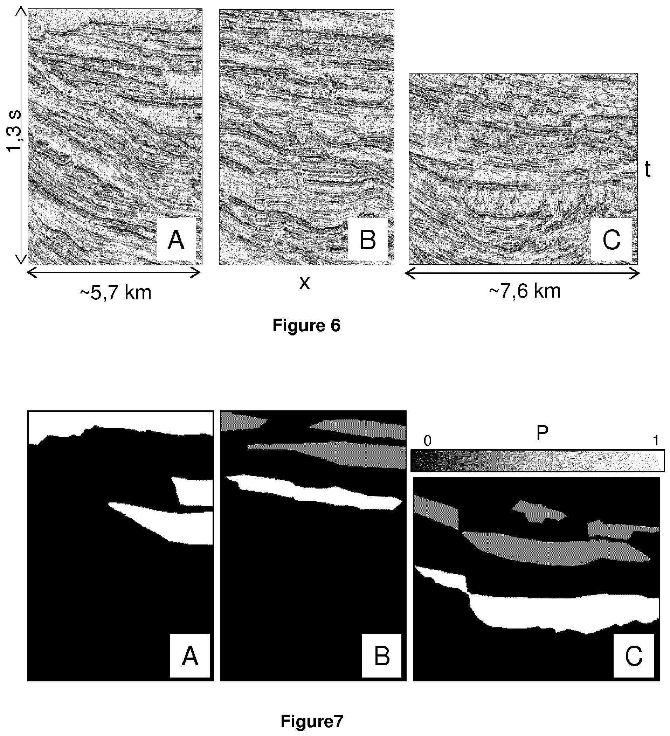

Pour cet exemple, les objets géologiques sont à délimiter dans une image sismique 3D (un cube sismique 3D après sommation, ou encore « post-stack » en anglais) et correspondent à des dépôts sédimentaires de type MTD (« mass transport deposits » ou « dépôts de transport de masse » en français). Ces objets sont reconnaissables dans la sismique par un interprétateur averti par les différents faciès sismiques qu'ils contiennent et leur agencement. L'image sismique a un échantillonnage vertical de 4 ms, et une distance inter-trace de 25 m dans les deux directions (crossline, inline). Les MTDs que l'on cherche à détecter ont une taille de plusieurs dizaines de kilomètres en extension latérale, et au maximum 100 ms en épaisseur. On utilise trois sections 2D du cube en tant qu'images sismiques d'apprentissage (cf. Figure 6 qui présente ces trois images sismiques d'apprentissage A, B, et C). Un pixel d'une image sismique a donc pour taille 4 ms x 25 m. Ces trois sections sismiques ont été interprétées par un interprétateur, qui a délimité des zones à très forte probabilité a priori d'appartenance P à un objet géologique de type MTD (zones en blanc dans la Figure 7 pour les trois images sismiques d'apprentissage A, B et C), une probabilité inférieure (zones en gris foncé dans la Figure 7 pour les trois sections A, B et C) et des zones ne comprennent pas de MTD (zones en noir dans la Figure 7 pour les trois images sismiques d'apprentissage A, B et C).

Pour cet exemple d'illustration, on utilise des attributs texturaux, de type GLCM tels que définis ci-dessus. En particulier, on utilise les attributs texturaux classiquement appelés « Contraste », « Corrélation », « Energie » et « Homogénéité » (voir par exemple les documents (Haralick, 1976 ; West et al., 2002)). On choisit une fenêtre d'étude (le voisinage autour du pixel, dans lequel sera calculée la matrice de co-occurrence) de 11 x 11 pixels. On utilise deux échelles différentes : des distances de $d=1$ et de $d=2$ pixels. Pour chaque échelle, on utilise toutes les orientations *theta* possibles (4 orientations possibles pour l'échelle 1 et 8 pour l'échelle 2). Pour le calcul, il faut limiter le nombre de niveaux possibles pour les valeurs d'amplitude sismique (niveaux de gris). Ce nombre est souvent 256, ou 64, ou 8 au moins ; dans le cas présent, on choisit seulement deux niveaux de gris. Les calculs sont ainsi plus courts, car le temps de calcul des attributs GLCM augmente avec le carré du nombre de niveaux de gris. Pour compenser la perte de l'information d'amplitude, on ajoute au jeu d'attributs GLCM un attribut issu de l'enveloppe du signal sismique : pour un pixel, il s'agit du résultat du filtrage gaussien de l'image de l'enveloppe sismique, avec un noyau gaussien 2D, de taille voisine de la fenêtre de 11 x 11 pixels. Les attributs GLCM, ainsi que cet attribut basé sur l'enveloppe sont calculés pour tous les pixels de l'image d'apprentissage. Les attributs sont ensuite normalisés.

Pour cette mise en oeuvre de l'invention, on réduit la dimension de l'espace des attributs. Pour cela, on utilise l'Analyse en Composantes Principales (ACP), que l'on applique séparément aux attributs issus des échelles $d=1$ et $d=2$. L'attribut issu de l'enveloppe est laissé à part de l'ACP. Pour chacune des deux échelles, on conserve seulement les vecteurs propres dont la somme cumulée des valeurs propres normalisées est supérieure à 0.97. On a alors trois nouveaux attributs pour l'échelle $d=1$ et 6 pour l'échelle $d=2$. On impose des poids de 0.5 aux attributs de l'échelle 2 (pour assurer une représentation égale des échelles 1 et 2), et on ajoute à ce jeu de neuf nouveaux attributs celui issu de l'enveloppe, avec un poids 3.

Ainsi, la base du nouvel espace d'attributs est constituée de ces 10 vecteurs propres : les trois premiers propres issus de l'ACP sur l'échelle 1, les 6 suivants (avec un poids 0.5) issus de l'ACP sur l'échelle 2, et le dernier issu de l'enveloppe, avec un poids 3.

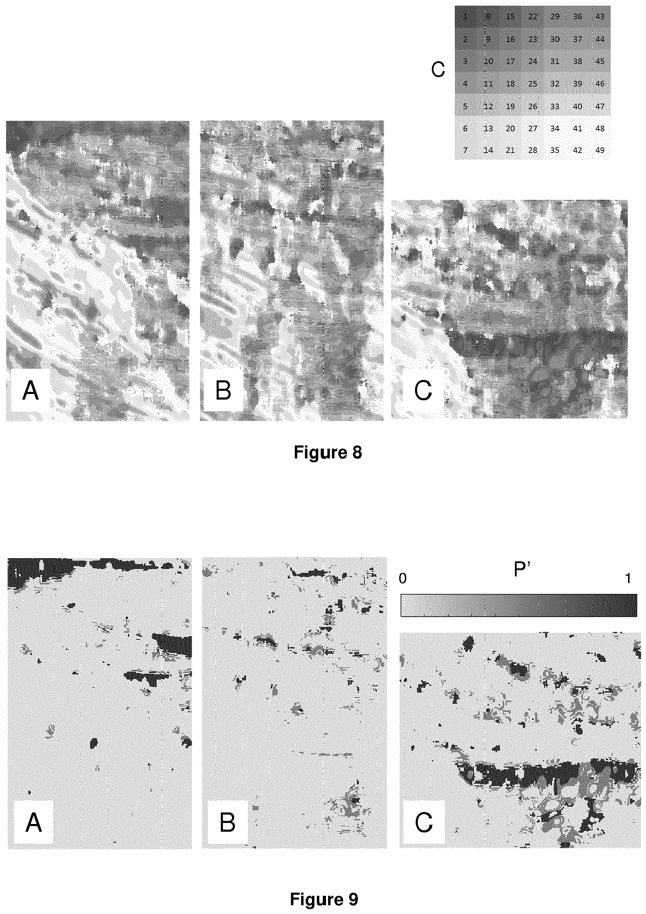

On applique ensuite un algorithme de classification non supervisé de type GTM (« Generative Topographic Mapping », et notée « GTM ») tel que défini ci-dessus, dans sa version 2D (la variété créée sera de dimension 2). On détermine ainsi pour chaque pixel de chaque image d'apprentissage, un label de classe parmi 49 classes (cf. Figure 8 qui présente la répartition des 49 classes sur chacune des images sismiques d'apprentissage A, B, et C).

On applique ensuite la mise en oeuvre préférée du procédé selon l'invention, telle que décrite à l'étape 4, pour assigner à chaque classe une probabilité a posteriori de présence des objets. Le paramètre $\alpha$ est fixé à 0.8 (degré de confiance dans l'interprétation). On détermine alors, pour chaque classe, la probabilité a posteriori associée. La Figure 9 présente les probabilités a posteriori P' ainsi obtenues pour chacune des images sismiques d'apprentissage A, B et C.

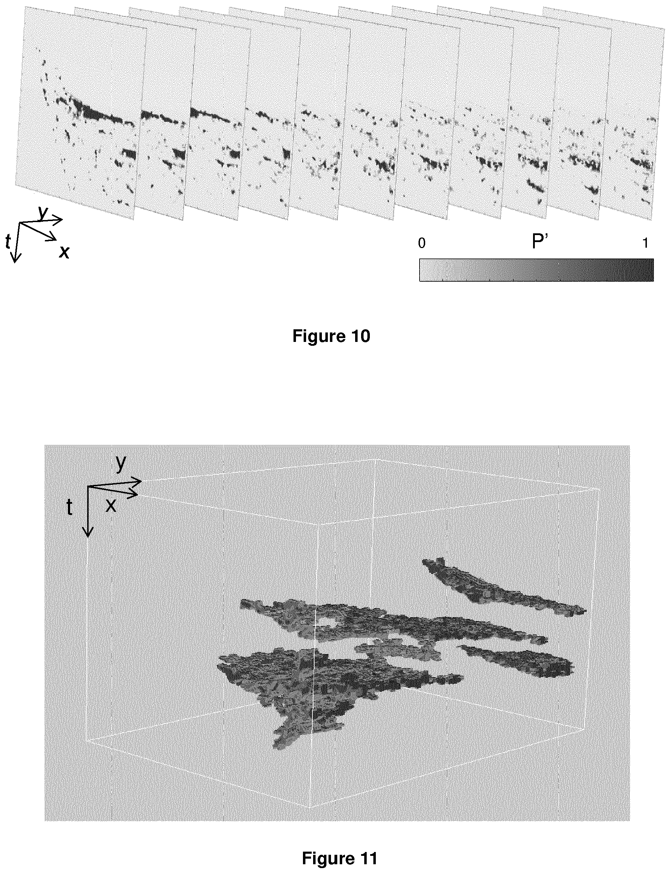

Puis on « propage » les probabilités a posteriori ainsi déterminées pour chacune des images sismiques d'apprentissage à une série de 72 sections 2D parallèles extraites du cube sismique 3D, qui sont, avantageusement parallèles aux images d'apprentissages. Les sections sont extraites avec un échantillonnage de une section tous les 250 m (1 section sur 10), ce qui est plutôt fin par rapport à la taille des objets recherchés. La Figure 10 représente une partie de ces sections habillées en probabilités a posteriori P'.

A des fins illustratives et de façon à déterminer un volume sismique complet, on un réplique chaque section 10 fois, pour représenter le volume sismique 3D global. Une interpolation des valeurs des probabilités a posteriori entre chaque section aurait pu être avantageusement effectuée. On applique ensuite un post-traitement par seuillage sur les valeurs des probabilités. Plus précisément, pour cet exemple, on conserve seulement les pixels dont les probabilités a posteriori valent 1, suivi d'un seuillage sur la taille des objets et sur la répartition des numéros de classe à l'intérieur des objets.

On obtient la délimitation des MTDs recherchés présentée en Figure 11. On peut observer que le procédé selon l'invention a ainsi permis de (i) délimiter automatiquement ces objets sans omettre de partie du fait de la différence de faciès, et (ii) conserver l'information relative à ces faciès variés au sein-même de l'objet délimité, ce qui est utile par la suite pour l'interprétation des propriétés de l'objet.

**Revendications**

**1.** Procédé mis en oeuvre par ordinateur pour la détection automatique d'au moins un objet géologique appartenant à un type d'objet géologique dans au moins une image sismique d'une formation souterraine, à partir de probabilités a priori d'appartenance audit type d'objet géologique attribuées à chacun des échantillons de ladite image, **caractérisé en ce que** on réalise au moins les étapes suivantes :

A. On définit une transformation de ladite image en une pluralité d'attributs sismiques et on applique ladite transformation pour déterminer une pluralité d'attributs sismiques de ladite image ;
B. On applique une classification non supervisée auxdits attributs sismiques de ladite image et on détermine une classe pour chacun desdits échantillons de ladite image ;
C. Pour chacune desdites classes, on détermine une probabilité a posteriori d'appartenance desdits échantillons de ladite classe audit type d'objet géologique en fonction desdites probabilités a priori desdits échantillons de ladite image appartenant à ladite classe, de ladite classe, et d'un paramètre $\alpha$ décrivant une confiance en lesdites probabilités a priori ;
D. Pour chaque échantillon de ladite image, à partir de ladite classe dudit échantillon, on attribue audit échantillon ladite probabilité a posteriori d'appartenance audit type d'objet géologique déterminée pour lesdits échantillons de ladite classe ;

et **en ce qu'**on détecte ledit objet géologique appartenant audit type d'objet géologique à partir desdites probabilités a posteriori d'appartenance audit type d'objet géologique déterminées pour chacun desdits échantillons de ladite image.

**2.** Procédé selon la revendication 1, dans lequel ladite probabilité a posteriori $y_i$ probabilité a posteriori d'appartenance desdits échantillons de ladite classe $i$ audit type d'objet géologique est déterminée de la manière suivante :

i. si $p_{1,i} > \dfrac{1}{\alpha+1}$, $y_i = s_1$.

ii. si $p_{1,i} \leq \dfrac{1}{\alpha+1}$, on détermine $q_i = max\left\{k \in 1:n \text{ tels que } \sum_{j\in 1:k} p_{j,i} \leq \dfrac{1}{\alpha+1}\right\}$, et

a. si $\sum_{j\in 1:q} p_{j,i} = \dfrac{1}{\alpha+1}$, alors $y_i = s_q$.

b. si $\sum_{j \in 1:q} p_{j,i} < \frac{1}{\alpha+1}$ , alors

- si q = n, $y_i = s_n$
- si q < n, $y_i = s_{q+1}$.

où

- $X$ un vecteur contenant une valeur de ladite probabilité d'appartenance a priori pour chaque échantillon de ladite image sismique ;
- $L$ un vecteur contenant pour chacun desdits échantillons de ladite image sismique un identifiant de ladite classe à laquelle ledit échantillon appartient ;
- $S = \{s_1, s_2, ... s_n\} = \{s_k, k \in 1:n\}$ avec $0 = s_1 < s_2 < ... < s_n = 1$, l'ensemble des valeurs prises par les éléments dudit vecteur $X$ ;
- $C_i, i \in L$ ladite classe d'identifiant $i$;
- $p_{k,i} = p(s_k|C_i)$, la proportion des points de $C_i$ ayant pour valeur de probabilité a priori $s_k$ ;

3. Procédé selon l'une des revendications précédentes, dans lequel lesdits attributs sismiques sont des attributs texturaux.

4. Procédé selon l'une des revendications précédentes, dans lequel on applique une réduction de dimension auxdits attributs déterminés par ladite transformation.

5. Procédé selon la revendication 4, dans lequel ladite réduction de dimension est réalisée au moyen d'une analyse en composantes principales.

6. Procédé selon la revendication 4, dans lequel ladite réduction de dimension est réalisée au moyen d'une analyse d'une méthode de sélection d'attributs.

7. Procédé selon l'une des revendications précédentes, dans lequel ladite méthode de classification non supervisée est une méthode de cartes topographiques génératrices.

8. Procédé selon l'une des revendications précédentes, dans lequel on applique au moins lesdites étapes A) à D) à une première image sismique, et dans lequel, on applique au moins lesdites étapes suivantes à une seconde image sismique :

   I. on applique ladite transformation en attributs sismiques à ladite seconde image pour déterminer une pluralité d'attributs sismiques de ladite seconde image ;
   II. on applique ladite classification non supervisée auxdits attributs de ladite seconde image et on détermine une classe pour chacun desdits échantillons de ladite seconde image;
   III. pour chacune desdites classes de ladite seconde image et pour chacun desdits échantillons de ladite seconde image appartenant à ladite classe, on attribue ladite probabilité d'appartenance audit type d'objet géologique déterminée pour ladite classe sur ladite première image.

9. Procédé selon l'une des revendications précédentes, dans lequel on détecte lesdits objets géologiques appartenant audit type d'objet géologique dans ladite au moins une image au moyen d'une méthode de seuillage appliquée aux valeurs desdites probabilités a posteriori d'appartenance audit type d'objet géologique déterminées pour chacun desdits échantillons de ladite au moins une image.

10. Procédé d'exploitation d'une formation souterraine comprenant des hydrocarbures, au moyen d'au moins une image sismique relative à ladite formation, dans lequel :

   - on détecte dans ladite image sismique des objets géologiques appartenant à au moins un type d'objet géologique au moyen du procédé selon l'une des revendications 1 à 9,
   - on définit un modèle géologique représentatif de ladite formation à partir au moins desdits objets géologiques détectés et on définit un schéma d'exploitation desdits hydrocarbures de ladite formation à partir au moins dudit modèle géologique ;

- on exploite lesdits hydrocarbures de ladite formation selon ledit schéma d'exploitation.

**11.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

Figure 1

Figure 2a

Figure 2b

Figure 2c

**Figure 3a**

**Figure 3b**

**Figure 4a**

**Figure 4b**

**Figure 5a**

**Figure 5b**

Figure 6

Figure7

Figure 8

Figure 9

Figure 10

Figure 11

**Europäisches Patentamt**
**European Patent Office**
**Office européen des brevets**

# RAPPORT DE RECHERCHE EUROPEENNE

Numéro de la demande

EP 19 17 3720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | JIE QI ET AL: "Semisupervised multiattribute seismic facies analysis", INTERPRETATION, vol. 4, no. 1, 1 février 2016 (2016-02-01), pages SB91-SB106, XP055580612, US ISSN: 2324-8858, DOI: 10.1190/INT-2015-0098.1 | 1,3-11 | INV. G01V1/30 G01V99/00 |
| A | * abrégé * * figures 1,2,5 * * pages SB91,SB9 * * pages SB96,SB9 * * page SB101 - page SB105 * | 2 | |
| A | H Hashemi ET AL: "Clustering Seismic Datasets for Optimized Facies Analysis Using a SSCSOM Technique", 79th EAGE Conference & Exhibition, 12 juin 2017 (2017-06-12), pages 1-5, XP055580621, Extrait de l'Internet: URL:http://www.earthdoc.org/publication/publicationdetails/?publication=88633 [extrait le 2019-04-12] * abrégé * * figures 1,2 * * pages 1-4 * | 1-11 | DOMAINES TECHNIQUES RECHERCHES (IPC) G01V G06K G06N |
| Y | US 9 008 972 B2 (IMHOF MATTHIAS [US]; XU PENG [US]; EXXONMOBIL UPSTREAM RES CO [US]) 14 avril 2015 (2015-04-14) | 1,3-11 | |
| A | * abrégé * * figures 1,2 * * colonne 17, lignes 12-15 * | 2 | |

Le présent rapport a été établi pour toutes les revendications

| Lieu de la recherche | Date d'achèvement de la recherche | Examinateur |
|---|---|---|
| La Haye | 26 septembre 2019 | Meyer, Matthias |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 17 3720

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-09-2019

| Document brevet cité au rapport de recherche | Date de publication | Membre(s) de la famille de brevet(s) | Date de publication |
|---|---|---|---|
| US 9008972 B2 | 14-04-2015 | AU 2010271128 A1 | 02-02-2012 |
| | | CA 2764681 A1 | 13-01-2011 |
| | | GB 2483202 A | 29-02-2012 |
| | | US 2012090834 A1 | 19-04-2012 |
| | | WO 2011005353 A1 | 13-01-2011 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6438493 B
- EP 2659291 B1
- EP 1334379 A1
- US 6438493 B1
- US 9008972 B2

**Littérature non-brevet citée dans la description**

- **ADAMS, R. ; BISHOF, L.** Seeded region growing. *IEEE Trans on Pattern Analysis and Machine Intelligence,* 1994, vol. 16, 641-647
- **BISHOP, C. M. ; SVENSÉN, M. ; WILLIAMS, C.K.I.** GTM: The Generative Topographic Mapping. *Neural computation,* 1998, vol. 10 (1), 215-234
- **CARRILLAT, A. ; RANDEN, T. ; SONNELAND, L. ; ELVEBAKK, G.** Seismic stratigraphic mapping of carbonate mounds using 3D texture attributes. *64th EAGE Conférence & Exhibition,* 2002, G-41
- **HARALICK, ROBERT M. ; SHANMUGAM, K. ; DINSTEIN, I.** Textural Features for Image Classification. *IEEE Transactions on Systems, Man, and Cybernetics,* 1973, vol. SMC-3 (6), 610-621
- **HASHEMI, H. ; DE BEUKELAAR, P. ; BEIRANVAND, B. ; SEIEDALI, M.** Clustering seismic datasets for optimized faciès analysis using a SSCSOM technique. *79th EAGE Conférence & Exhibition,* 2017
- Learning vector quantization for pattern récognition. **KOHONEN, T.** Technical report TKK-F-1601. Helsinki University of Technology, 1986
- **LLOYD, STUART P.** Least Squares Quantization in PCM. *IEEE Transactions on Information Theory,* 1982, vol. 28, 129-137
- **MATOS, M. C. ; MALLESWAR (MOE) Y. ; SIPUIK-INENE M. A. ; MARFURT K. J.** Integrated seismic texture segmentation and cluster analysis applied to channel delineation and chert reservoir characterization. *Geophysics,* 2011, vol. 76 (5), 11, , 21
- **MUMFORD, D. ; SHAH, J.** Optimal approximation by piecewise smooth functions and associated variational problems. *Communications on Pure Applied Mathematics,* 1989, vol. 42, 577-685
- **ZHAO, T. ; ZHANG, J. ; LI, F. ; MARFURT, K. J.** Characterizing a turbidite system in Canterbury Basin, New Zealand, using seismic attributes and distance-preserving self-organizing maps. *Interpretation,* 2016, vol. 4 (1), SB79-SB89
- **ZHAO, T. ; LI, F. ; MARFURT, K.** Advanced self-organizing map faciès analysis with stratigraphic constraint. *SEG Technical Program Expanded Abstracts,* 2016, 1666-1670
- **WANG, Z. ; HEGAZY, T. ; LONG, Z. ; AIREGIB, G.** Noise-robust détection and tracking of salt domes in postmigrated volumes using texture, tensors, and subspace learning. *Geophysics,* 2015, vol. 80 (6), WD101-WD116